# FASCICULE DE BREVET EUROPEEN

(11) **EP 0 515 263 B1**
(45) Date de publication et mention de la délivrance du brevet: **17.08.1994**
(21) Numéro de dépôt: 92401361.8
(22) Date de dépôt: 20.05.1992
(51) Int. Cl.: F02K 1/68, F02K 3/075, F02K 1/12

(54) **Inverseur de poussée pour turbosoufflante à très grand taux de dilution**
Schubumkehrvorrichtung für Turboantriebwerk mit hohem Nebenstromverhältnis
Thrust reverser for high by-pass ratio turbofan

(30) Priorité: 23.05.1991 FR 9106197
(43) Date de publication de la demande: 25.11.1992
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Lardellier, Alain Marie Joseph, F-77000 Melun (FR)

(56) Documents cités:
- FR-A- 1 479 131
- FR-A- 1 589 899
- GB-A- 627 643
- GB-A- 2 064 005
- GB-A- 2 118 248
- GB-A- 2 230 239

## Description

La présente invention concerne un inverseur de poussée pour turbosoufflante à très grand taux de dilution.

Dans ce type de turboréacteur comprenant un canal primaire de circulation des gaz dits de flux chaud constituant une veine principale d'éjection et un canal annulaire, coaxial au canal primaire, où circulent des gaz dits de flux froid, à la sortie, par exemple, d'une soufflante située à l'entrée du turboréacteur, et constituant une veine secondaire d'éjection, l'inversion de poussée met en oeuvre principalement ou uniquement la déviation du flux secondaire, et ceci particulièrement lorsque le taux de dilution est élevé.

Il est connu dans ces applications d'utiliser des éléments déplaçables ou obstacles susceptibles en position déployée de former un ensemble annulaire continu qui obture ledit canal secondaire de manière à dévier le flux secondaire et à orienter les nappes du flux en procurant une inversion de poussée. Lors du fonctionnement en poussée directe, par contre, lesdits obstacles doivent être rétractés et escamotés en laissant libre et dégagé le canal secondaire pour la circulation du flux secondaire. Dans certains types connus d'inverseur de poussée, lesdits obstacles sont ainsi escamotés dans la paroi radialement externe du canal secondaire.

D'autres solutions prévoient d'escamoter lesdits obstacles au niveau de la paroi radialement interne du canal secondaire ou paroi enveloppant la partie interne ou centrale du moteur. Des solutions de ce type sont notamment décrites par FR-A-1 479 131. Diverses améliorations ont été proposées par FR-A-2 625 261 ou par FR-A-2 650 861.

Toutefois des problèmes subsistant pour l'adaptation d'un inverseur de poussée de ce type à un groupe motopropulseur à très grand taux de dilution, en tenant compte des conditions d'installation sur avion et notamment de la réduction de masse, tout en évitant d'augmenter l'encombrement du moteur au niveau de son diamètre extérieur et de la garde au sol à respecter. L'inverseur de poussée doit également assurer avec efficacité les performances requises d'inversion ainsi que, lors du fonctionnement en poussée directe, une paroi interne aérodynamiquement continue sans introduire de perturbations dommageables dans les écoulements. Un des buts de l'invention est aussi d'obtenir une simplicité de définition facilitant la réalisation et la maintenance.

Un inverseur de poussée du type précité répondant à ces conditions est caractérisé en ce que les volets en position déployée ont dans au moins deux parties de l'ensemble annulaire, respectivement une partie inférieure et une partie supérieure, un angle d'inclinaison par rapport à sa position rétractée correspondant à un déplacement plus important que dans au moins deux parties latérales dudit ensemble annulaire de manière que la section de sortie de l'inverseur de poussée est plus grande dans lesdites zones latérales que dans lesdites zones inférieure et supérieure.

Selon les applications particulières dont les conditions déterminent un choix de déploiement des volets dans le sens du courant du flux secondaire ou, au contraire, à contre-courant, des modes avantageux de réalisation peuvent être prévus.

D'autres caractéristiques et avantages de l'invention seront mieux compris à la lecture de la description qui va suivre des modes de réalisation de l'invention, en référence aux dessins annexés sur lesquels :
- la figure 1 montre, selon une demi-vue schématique en coupe longitudinale par un plan passant par l'axe de rotation du moteur, une turbosoufflante du type à très grand taux de dilution installée sous l'aile d'un avion et comportant un inverseur de poussée conforme à un premier mode de réalisation à l'invention, dont les obstacles sont en position rétractée, correspondant à un fonctionnement en poussée directe ;
- la figure 2 montre, selon une demi-vue schématique analogue à celle de la figure 1, la turbosoufflante représentée sur la figure 1 lorsque les obstacles de l'inverseur de poussée sont en position déployée, correspondant à un fonctionnement en inversion de poussée ;
- la figure 3 montre, selon une vue de détail agrandie de la figure 1 le principe de mise en place de l'inverseur de poussée ;
- la figure 4 montre, selon une vue de détail agrandie de la figure 2 le principe de fonctionnement de l'inverseur en inversion de poussée ;
- la figure 5 montre la position des volets de l'inverseur de poussée, en position déployée ;
- la figure 6 montre selon une vue schématique partielle en perspective la disposition des volets de l'inverseur de poussée, en position intermédiaire ;
- les figures 7 et 8 représentent schématiquement les angles différents d'ouverture des volets de l'inverseur de poussée suivant leur position sur le pourtour circonférentiel ;
- la figure 9 représente une vue schématique de l'inverseur de poussée en position déployée, vu de l'avant du moteur ;
- la figure 10 montre, selon une demi-vue schématique correspondant à celle de la figure 2, la turbosoufflante équipée d'un inverseur de poussée en position d'inversion, suivant une variante de réalisation de l'invention ;
- la figure 11 représente une vue agrandie de détail de la figure 10 ;
- la figure 12 représente une vue schématique de l'inverseur de poussée représenté sur les figures 10 et 11 lors d'un fonctionnement en augmentation de section de tuyère de sortie ;
- la figure 13 montre, selon une vue correspondant à celle de la figure 3, un inverseur de poussée conforme à un second mode de réalisation de l'invention ;
- la figure 14 montre, selon une vue correspondant à celle de la figure 2, l'inverseur de poussée représenté sur la figure 13 en position d'inversion ;
- la figure 15 montre, selon une vue correspondant à celle de la figure 4, le principe de fonctionnement de l'inverseur de poussée représenté sur les figures 13 et 14 en inversion de poussée ;
- la figure 16 représente, selon une vue correspondant à celle de la figure 9, l'inverseur de poussée représenté sur les figures 13 à 15, en position déployée, vu de l'avant du moteur ;
- la figure 17 montre la variante de réalisation représentée sur la figure 10 appliquée à l'inverseur de poussée conforme au second mode de réalisation des figures 13 à 16 ;
- la figure 18 montre l'inverseur de poussée représenté sur la figure 17, en position d'inversion ;
- la figure 19 représente une vue agrandie de détail de la figure 18.

Une application avantageuse de la présente invention concerne notamment les moteurs aéronautiques du type turbosoufflante à très grand taux de dilution qui ont une utilisation intéressante sur les avions civils, notamment du fait des gains en consommation spécifique de carburant que permettent les aménagements apportés à leur cycle thermodynamique. Ces avantages entraînent cependant des contraintes qui conduisent notamment à rechercher des solutions pour obtenir une réduction de la masse et de la traînée aérodynamique et résoudre les problèmes d'installation sur avion, notamment en réduisant l'encombrement au niveau des répercussions sur le diamètre externe de nacelle et en assurant une garde suffisante au sol.

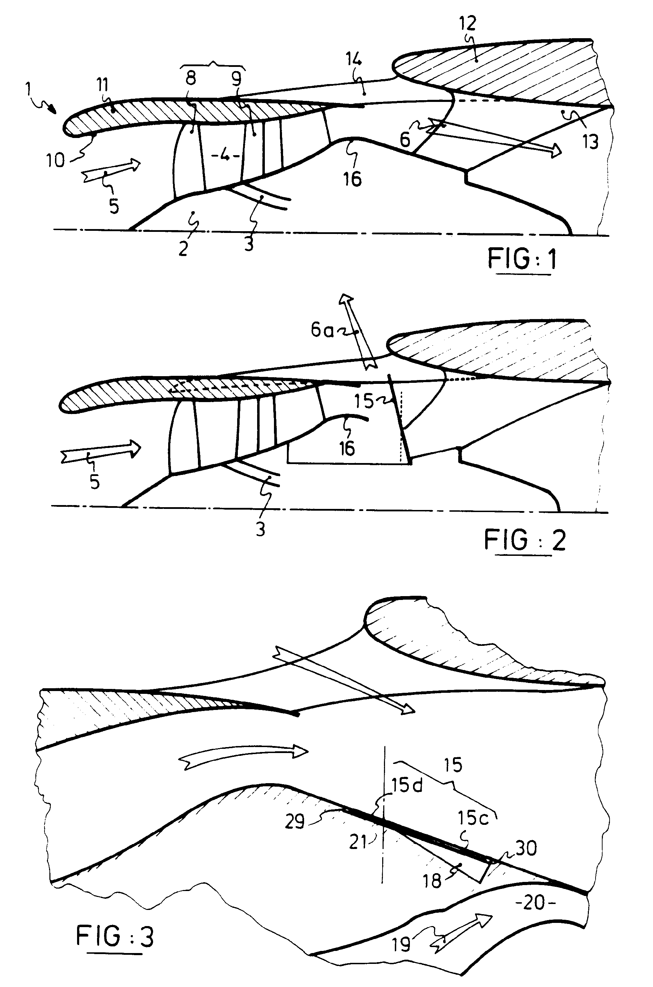

Les figures 1 et 2 montrent un exemple d'un tel moteur 1 du type turbosoufflante auquel est appliqué un premier mode de réalisation de l'inverseur de poussée conforme à l'invention. Ledit moteur 1 comprend un moteur de base 2 du type turboréacteur en position centrale, dont les contours externes ont été esquissés sur les figures 1 et 2, l'entrée du canal primaire de la veine de circulation des gaz étant représentée en 3 ; le principe de fonctionnement et les éléments constitutifs du turboréacteur 2 étant par ailleurs bien connus, ne seront pas décrits plus en détails. Un canal annulaire 4 est ménagé autour dudit moteur de base 2, constituant un canal secondaire de circulation de flux dit flux secondaire ou flux froid, symbolisé par les flèches 5 à l'entrée et 6 à la sortie après passage à travers une soufflante 7 comportant notamment au moins un étage d'aubes mobiles 8 de compression et un étage redresseur d'aubes fixes 9. Ledit canal secondaire 4 est notamment délimité par une paroi radialement externe 10 qui est intégrée à une nacelle 11 qui est dans ce cas et de préférence du type dit nacelle courte. Dans l'exemple représenté sur les figures 1 et 2, le moteur 1 est installé sous l'aile 12 d'un avion à laquelle ledit moteur 1 est supporté par un mât 13 à l'arrière et par des bras 14 à l'avant dont l'un est représenté sur les figures 1 et 2. Le moteur 1 est schématiquement représenté sur la figure 1 dans une configuration correspondant à un fonctionnement en poussée directe, une partie de la poussée étant procurée par le flux 6 sortant à l'arrière du canal secondaire 4. Sur la figure 2 le moteur est représenté dans une configuration correspondant à un fonctionnement en inversion de poussée, la poussée inverse étant obtenue par la déviation du flux 6a sortant du canal secondaire 4, obtenue grâce au déploiement dans la veine de circulation du flux d'obstacles 15 solidaires de l'enveloppe externe 16 dudit moteur central de base 2 et qui, lors du fonctionnement en poussée directe représenté sur la figure 1, sont escamotés à l'intérieur de ladite enveloppe 16 en formant avec elle une paroi aérodynamiquement continue constituant la limite radialement interne de la veine de circulation du flux 6.

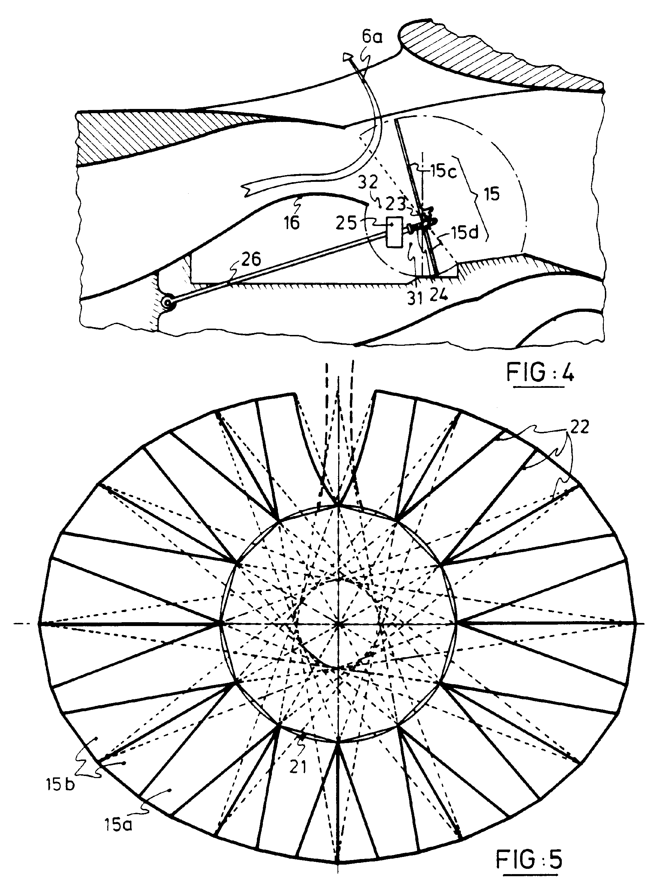

Les figures 3 et 4 montrent les détails de mise en place d'un inverseur de poussée 17 conforme à l'invention, intégré au moteur 1. Lors d'un fonctionnement en poussée directe correspondant à la figure 3, lesdits obstacles 15 sont disposés en position escamotée dans des logements 18 ménagés dans l'enveloppe externe 16 du moteur central de base 2 dont la partie arrière du canal primaire de circulation du flux primaire dit flux chaud symbolisé par la flèche 19 est schématiquement représentée en 20.

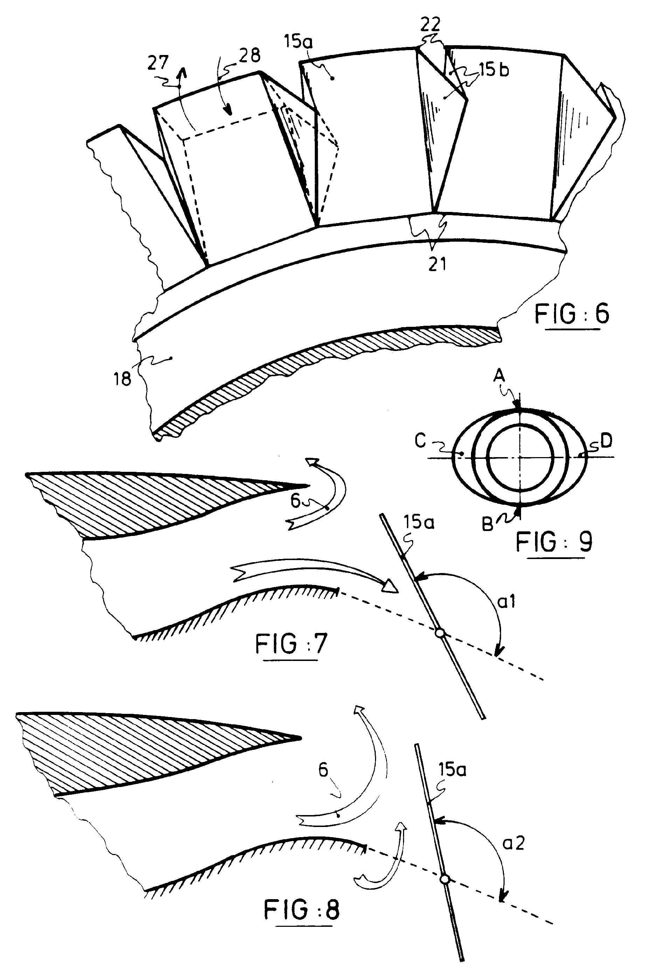

Lors d'un fonctionnement en inversion de poussée correspondant à la figure 4, les obstacles 15 sont déployés à l'arrière du canal secondaire 4, obturant ledit canal 4 et déviant le flux secondaire 6a. Dans l'exemple de réalisation représenté sur les figures 3 et 4 lesdits obstacles 15 sont constitués par douze volets principaux 15a, chacun articulé sur un axe 21 solidaire de ladite enveloppe 16. La figure 5 montre une vue schématique en position déployée des douze volets 15a. Les volets 15a sont liés entre eux par des paires de volets secondaires 15b, les liaisons étant assurées par des axes 22 autorisant la rotation desdits volets entre eux. Chaque volet secondaire 15b présente une forme générale triangulaire. La vue partielle de la couronne annulaire des volets 15a et 15b représentée sur la figure 6 montre les dispositions de volets entre eux dans une position intermédiaire entre la position escamotée et la position de déploiement total.

Dans l'exemple de réalisation représenté sur les figures 3 et 4, le système de commande des déplacements des volets principaux 15a est constitué par une roue dentée 23 solidaire du volet 15a et une vis tangente 24 entraînée par un moteur 25 qui peut notamment être hydraulique ou pneumatique et est soutenu par des bielles 26 reliées au moteur de base 2. Chaque volet principal 15a peut être associé à un système de commande ou, en variante, un sytème de commande unique peut être utilisé pour plusieurs volets. La synchronisation entre les différents éléments de commande peut être assurée par tout dispositif connu en soi tel que des liaisons de type CARDAN ou HOLDAM ou à flexibles métalliques. Ces pièces de commande assurent les déplacements des volets principaux 15a, pivotant autour des axes 21 et entraînant avec eux les volets secondaires 15b, comme schématisé sur la figure 6. Lors d'un actionnement de l'inverseur de poussée vers sa position d'inversion de poussée, les volets se déplacent dans le sens des flèches 27, les volets secondaires 15b s'écartent pour constituer un tronc de cône continu en fin de course, correspondant à la position représentée sur les figures 4 et 5. La section de sortie de l'inverseur de poussée est réglée par l'inclinaison a des volets 15. Dans le sens inverse, lors d'un actionnement de l'inverseur de poussée vers un retour à sa position de poussée directe, les volets se déplacent dans le sens des flèches 28, les volets secondaires 15b se rapprochent pour venir en contact par deux en fin de course et se loger verticalement dans le logement 18, tels que représentés sur la figure 3.

De manière remarquable et conforme à l'invention, l'axe de rotation 21 des volets principaux 15a n'est pas situé à une extrémité desdits volets. Chaque volet principal 15a, en position escamotée de fonctionnement en poussée directe, représentée sur la figure 3, a une partie 15c situé en aval de l'axe 21 et une partie 15d située en amont de l'axe 21, ces deux parties 15c et 15d suivant la ligne théorique de profil optimal de délimitation aérodynamique de la veine de circulation des gaz et se raccordant en continuité du côté amont en 29 et du côté aval en 30 avec l'enveloppe externe 16 du moteur central de base 2. En position déployée de fonctionnement en inversion de poussée, représentée sur la figure 4, l'obstacle d'inversion est constitué par la partie 15c du volet principal 15a et la partie 15d du volet principal 15a en se déplaçant ouvre, par contre, dans la veine de circulation des gaz un puits interne 31 de manière à éviter dans la zone 32 de rencontre entre la ligne de l'enveloppe interne 16 et le volet l'apparition de turbulences qui nuiraient à l'efficacité aérodynamique de l'inverseur de poussée et par suite aux performances recherchées.

Cette disposition est complétée par une adaptation du système de commande des volets 15a destinée à améliorer le contrôle et la répartition des nappes du flux inversé 6. Dans la position déployée des volets 15a correspondant au fonctionnement en inversion de poussée, tel que représenté sur les figures 4 et 5, on adopte en effet une section de sortie variable de l'inverseur de poussée suivant le pourtour circonférentiel. Ce résultat est obtenu en donnant grâce aux systèmes de commande un angle a d'inclinaison des volets principaux 15a différent suivant la position circonférentielle desdits volets. Ainsi dans les parties inférieure A et supérieure B de l'inverseur de poussée, les volets 15a ont un angle d'inclinaison al tel que représenté sur le schéma de la figure 7 correspondant à un déplacement plus important du volet 15a par rapport à sa position escamotée. Dans ces zones A et B, la section de sortie de l'inverseur est ainsi plus faible et en conséquence, le débit est également plus faible. Au contraire, dans les zones C et D correspondant aux zones latérales de l'inverseur de poussée, de part et d'autre de l'axe horizontal du moteur. Les volets 15a ont dans ce cas, comme représenté sur la figure 8, un angle d'inclinaison a₂ correspondant à un déplacement moins important du volet 15a par rapport à sa position escamotée. Le volet 15a est dans ce cas dans une position réglant une section de sortie maximale de l'inverseur de poussée compatible avec l'efficacité de l'orientation inversée de la poussée. L'inverseur de poussée, vu depuis l'avant du moteur a dans ce cas, extérieurement une forme ovale, le flux d'éjection du débit d'air étant divisé en deux nappes principales, comme schématisé sur la figure 9. Selon les applications particulières, d'autres répartitions circonférentielles des angles a d'inclinaison des volets 15a peuvent être prévues, de manière à constituer par exemple quatre nappes d'éjection.

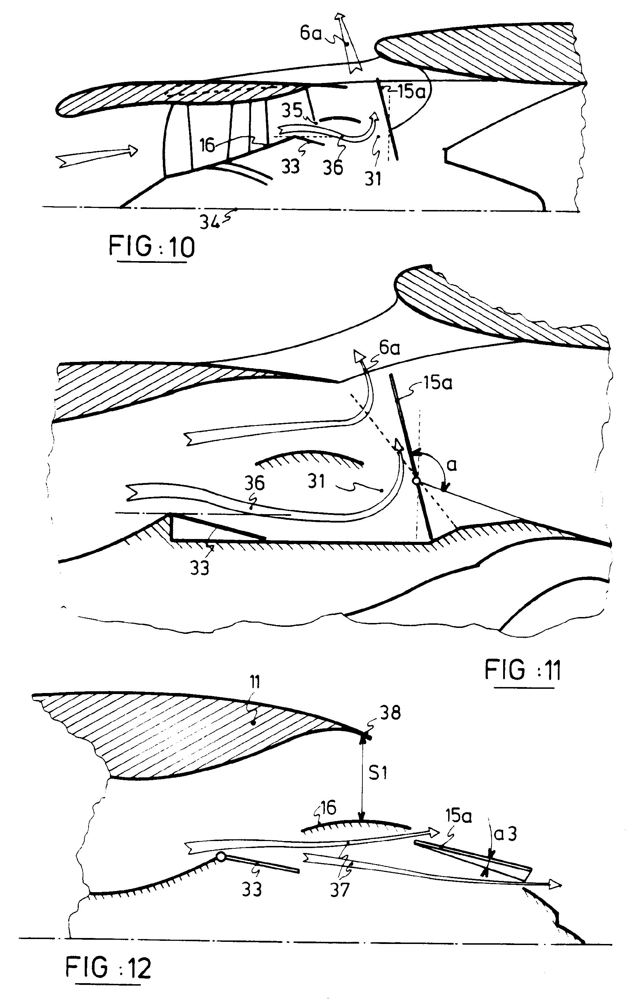

Lorsque, dans certaines applications, les dispositions de l'invention qui viennent d'être décrites ne sont pas suffisantes pour assurer les qualités recherchées des écoulements, des dispositions complémentaires peuvent être adjointes. Comme représenté sur la figure 10, un élément mobile du type vanne 33 est adjoint sur l'enveloppe externe 16 du moteur central de base 2, à l'amont de chaque volet principal 15a. Lors du fonctionnement en poussée directe, la vanne 33 se raccorde au profil de l'enveloppe 16, en continuité avec la surface de cette enveloppe. Lors du fonctionnement en inversion de poussée, comme indiqué plus en détail sur la figure 11, la vanne 33 est déplacée en pivotement par tout moyen d'actionnement connu et non représenté sur les dessins en direction de l'axe longitudinal 34 du groupe moto-propulsif. Ce déplacement dégage une ouverture 35 dans l'enveloppe 16, permettant le passage d'un flux 36 qui rejoint le puits 31 en assurant la régularisation recherchée des écoulements pour l'efficacité optimale du flux inversé 6a.

Dans cette variante de réalisation représentée sur les figures 10 et 11, comme précédemment décrit en référence aux figures 5, 7, 8 et 9, une inclinaison a variable peut être donnée aux volets 15a suivant leur position sur le pourtour circonférentiel de l'inverseur de poussée de manière à obtenir une forme extérieure ovale et à assurer un contrôle des débits sur les nappes du flux inversé.

Pour des moteurs à très grand taux de dilution, notamment supérieur à 10, auxquels s'applique la présente invention, il devient nécessaire dans certaines phases de fonctionnement, notamment lors du décollage de l'avion par exemple, d'augmenter la section d'éjection de tuyère. Les éléments de l'inverseur de poussée conforme à l'invention qui vient d'être décrite, notamment en référence aux figures 10 et 11, permettent également de remplir cette fonction. En effet, comme représenté sur la figure 12, dans ce cas, les volets 15a sont légèrement déployés, suivant un angle d'inclinaison a₃ faible de manière à n'induire aucun effet d'inversion du flux. Les vannes 33 sont en outre ouvertes, ce qui permet le passage d'un flux supplémentaire 37 dont le débit peut atteindre jusqu'à 20% du débit total, correspondant ainsi à une augmentation de la section équivalente de sortie de tuyère S₁ définie au col entre l'enveloppe 16 et l'extrémité aval 38 de la nacelle 11.

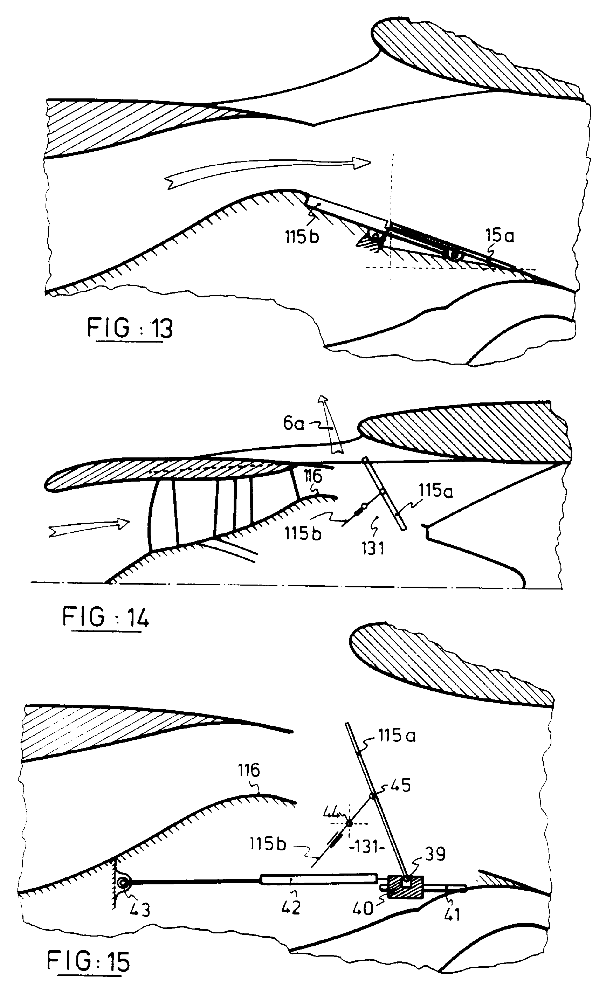

Selon un second mode de réalisation de l'inverseur de poussée conforme à l'invention représenté sur les figures 13 à 16, le déploiement des volets principaux 115a se fait à contre-courant comme indiqué sur la figure 14. Comme montré plus en détail sur la figure 15, les volets 115a ont leur extrémité aval liée au niveau d'une articulation 39 à un anneau 40. Cet anneau 40 est déplacé sur des glissières 41 fixes solidaires du moteur au moyen de vérins 42 reliés audit anneau 40 et solidarisées à la structure fixe du moteur central de base 2, comme schématisé en 43. Les vérins 42 peuvent être à vis, hydrauliques ou pneumatiques. L'inverseur de poussée comporte, comme précédemment décrit en référence aux figures 5 et 6 représentant le premier mode de réalisation de l'invention, des volets secondaires 115b disposés par paires entre deux volets principaux 115a. Les volets secondaires 115b sont liés à la structure fixe de l'inverseur de poussée au niveau d'une articulation 44 et aux volets principaux 115a au niveau d'une articulation 45. Suivant ce mode de réalisation, un puits 131 est directement ouvert dans la paroi interne délimitant la veine fluide au niveau de l'enveloppe 116 du moteur. Dans ce cas, le système de commande des volets 115a est également adapté pour obtenir une inclinaison variable des volets en position déployée suivant leur position A, B, C, D sur le pourtour circonférentiel de l'inverseur de poussée.

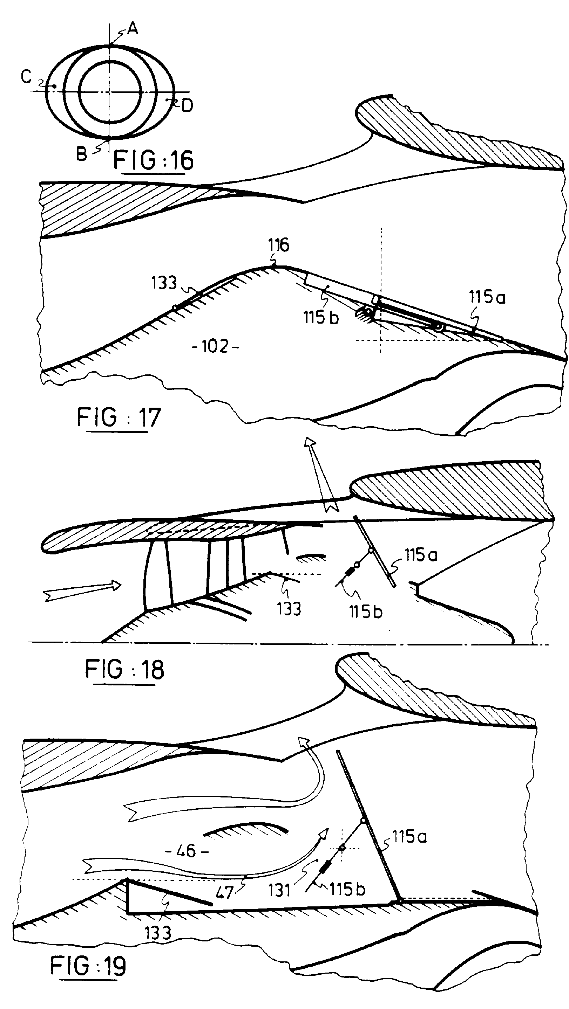

On obtient une forme extérieure ovale de l'inverseur telle que représentée sur la figure 16, en assurant un contrôle de la répartition des nappes du flux inversé 6a, de manière similaire à ce qui est obtenu suivant le premier mode de réalisation.

Une variante équivalente à celle qui a été décrite en référence aux figures 10 et 11 pour le premier mode de réalisation peut également être prévue pour le second mode, comme représenté sur les figures 17 à 19.

Un élément mobile du type vanne 133 est adjoint sur l'enveloppe externe 116 du moteur central de base 102, à l'amont de chaque volet principal 115a. L'ouverture de la vanne 133 dégage un passage 46 pour un flux 47 qui rejoint le puits 131, de manière à assurer une régularisation des écoulements, de manière similaire au premier mode de réalisation.

## Revendications

1. Inverseur de poussée de turbosoufflante à très grand taux de dilution comportant des éléments déplaçables ou volets (15, 115) susceptibles d'être escamotés, en position de poussée directe, dans la paroi de l'enveloppe externe (16, 116) du moteur central de base (2) et, en outre, d'être déployés, de manière à constituer des obstacles formant un ensemble annulaire de déviation du flux secondaire (6a) procurant une inversion de poussée, lesdits volets (15, 115) étant associés à un système de commande des déplacements logé à l'intérieur de ladite enveloppe (16, 116), caractérisé en ce que lesdits volets (15, 115) en position déployée ont dans au moins deux parties de l'ensemble annulaire, respectivement une partie inférieure (A) et une partie supérieure (B) un angle d'inclinaison a₁ correspondant à un déplacement plus important dudit volet (15, 115) par rapport à sa position rétractée que dans au moins deux autres parties latérales (C, D) dudit ensemble annulaire de manière que la section de sortie de l'inverseur de poussée est plus grande dans lesdites zones latérales (C, D) que dans lesdites zones inférieure (A) et supérieure (B).

2. Inverseur de poussée de turbosoufflante selon la revendication 1 dans lequel les volets déplaçables (15) sont articulés sur des axes de pivotement (21) solidaires de l'enveloppe (16) du moteur de base (2) et situés à mi-longueur de manière que, en position déployée, une partie supérieure (15c) dudit volet constitue l'obstacle de déviation du flux secondaire (6a) et une partie inférieure (15d) ouvre un puits interne (31) dans ladite enveloppe (16) en amont du volet (15), le déploiement desdits volets (15) se faisant dans le sens du courant du flux secondaire (6).

3. Inverseur de poussée de turbosoufflante selon l'une des revendications 1 ou 2 dans lequel un élément mobile de type vanne (33) est disposé sur l'enveloppé externe (16) en amont de chaque volet (15) de manière à ouvrir, en position d'inversion de poussée, un passage complémentaire du flux (36) par l'ouverture (35) dégagée par le déplacement de ladite vanne (33) vers ledit puits (31) pour rejoindre le flux principal inversé (6a).

4. Inverseur de poussée de turbosoufflante selon la revendication 3 dans lequel les éléments déplaçables reçoivent une configuration particulière de position telle que les volets (15) ont une faible inclinaison (a₃) par rapport à leur position rétractée et les vannes (33) ont un degré limité d'ouverture de manière à permettre le passage d'un flux supplémentaire (37) correspondant à une augmentation de la section équivalente de sortie du canal secondaire lors de certaines phases déterminées de vol, notamment le décollage.

5. Inverseur de poussée de turbosoufflante selon l'une quelconque des revendications 1 à 4 dans lequel lesdits volets (15) comprennent des volets principaux (15a), seuls reliés au système de commande et liés entre eux par des paires de volets secondaires (15b), les liaisons étant assurées par des axes (22) autorisant la rotation des volets entre eux et l'ensemble des volets (15) étant placés en position escamotée dans un logement (18) ménagé à l'intérieur de ladite enveloppe externe (16).

6. Inverseur de poussée de turbosoufflante selon la revendication 1 dans lequel les volets (115) ont leur extrémité aval liée au niveau d'une articulation (39) à un anneau (40) déplaçable sur des glissières fixes (41) au moyen de vérins (42) solidaires à la structure fixe (43) du moteur de base (2), ledit anneau (40) étant déplacé de l'aval vers l'amont lors du déploiement desdits volets (115) qui se fait à contre-courant du flux secondaire (6).

7. Inverseur de poussée de turbosoufflante selon la revendication 6 dans lequel un élément mobile de type vanne (133) est disposé sur l'enveloppe externe (116) en amont de chaque volet (115) de manière à ouvrir un passage (46) pour un flux complémentaire vers le puits (131) ménagé à l'amont du volet (115) pour rejoindre le flux principal inversé (6a).

8. Inverseur de poussée de turbosoufflante selon l'une des revendications 6 ou 7 dans lequel lesdits volets (115) comprennent des volets principaux (115a) seuls reliés au système de commande et liés entre eux par des volets secondaires (115b) disposés par paires entre deux volets principaux (115a), liés à la structure fixe de l'inverseur au niveau d'une articulation (44) et aux volets principaux (115a) au niveau d'une articulation (45).

## Patentansprüche

1. Schubumkehrvorrichtung für ein Turbofantriebwerk mit sehr großem Nebenstromverhältnis mit verstellbaren Elementen oder Klappen (15, 115), die in Direktschubposition in der Wandung der äußeren Hülle (16, 116) des zentralen Basismotors (2) versenkbar und außerdem so ausfahrbar sind, daß sie Hindernisse darstellen, die eine ringförmige Einheit zur Umlenkung der Sekundärströmung (6a) bilden, die eine Schubumkehr bewirkt, wobei die Klappen (15, 115) mit einem im Innern der genannten Hülle (16, 116) angeordneten Bewegungssteuerungssystem gekuppelt sind, **dadurch gekennzeichnet,** daß die Klappen (15, 115) in ausgefahrener Position in wenigstens zwei Bereichen der ringförmigen Einheit, und zwar in einem unteren Bereich (A) und in einem oberen Bereich (B), einen Neigungswinkel (a₁) haben, der einer größeren Verstellung der genannten Klappe (15, 115) gegenüber seiner zurückgezogenen Position entspricht, als in wenigstens zwei anderen seitlichen Bereichen (S, D) der ringförmigen Einheit, so daß der Ausgangsquerschnitt der Schubumkehrvorrichtung in den seitlichen Bereichen (C, D) größer ist als in der unteren Zone (A) und der oberen Zone (B).

2. Schubumkehrvorrichtung für ein Turbofantriebwerk nach Anspruch 1, bei der die verstellbaren Klappen (15) auf Gelenkachsen (21) verschwenkbar sind, die mit der Hülle (16) des Basismotors (2) fest verbunden sind und auf halber Länge angeordnet sind, so daß in ausgefahrener Position ein oberer Teil (15c) der Klappe das Umlenkhindernis für die Sekundärströmung bildet und ein unterer Teil (15d) in der Hülle (16) stromaufwärts der Klappe (15) einen inneren Schacht (31) öffnet, wobei das Ausfahren der Klappen (15) in Strömungsrichtung der Sekundärströmung (6) erfolgt.

3. Schubumkehrvorrichtung für ein Turbofantriebwerk nach einem der Ansprüche 1 oder 2, bei der auf der stromaufwärtigen Seite jeder Klappe (15) an der äußeren Hülle (16) ein bewegliches Element in Form eines Schiebers (33) so angeordnet ist, daß in Schubumkehrposition durch die durch Verstellen des Schiebers (33) freigegebene Öffnung (35) ein zusätzlicher Strömungsdurchlauf (36) geöffnet wird, der zu dem Schacht (31) verläuft, um sich wieder mit der umgelenkten Hauptströmung (6a) zu vereinigen.

4. Schubumkehrvorrichtung für ein Turbofantriebwerk nach Anspruch 3, bei der die verstellbaren Elemente eine derartige spezielle Konfiguration ihrer Position annehmen, daß die Klappen (15) relativ zu ihrer zurückgezogenen Position eine schwache Neigung (a₃) und die Schieber (33) einen begrenzten Öffnungsgrad haben, so daß in bestimmten Flugphasen, insbesondere beim Abheben, der Durchlauf einer zusätzlichen Strömung (37) ermöglicht wird, die einer Vergrößerung des äquivalenten Ausgangsquerschnitts des Sekundärkanals entspricht.

5. Schubumkehrvorrichtung für ein Turbofantriebwerk nach einem der Ansprüche 1 bis 5, bei der die Klappen (15) Hauptklappen (15a) umfassen, die allein mit dem Steuerungssystem gekuppelt und untereinander durch Paare von Sekundärklappen (15a) verbunden sind, wobei diese Verbindungen durch Achsen (22) erfolgen, die eine Drehung der Klappen relativ zueinander ermöglichen, und wobei die Einheit von Klappen (15) in versenkter Position in einer im Innern der äußeren Hülle (16) ausgebildeten Aufnahme (18) angeordnet ist.

6. Schubumkehrvorrichtung für ein Turbofantriebwerk nach Anspruch 1, bei der die Klappen (115) mit ihrem stromabwärtigen Ende im Bereich eines Gelenks (39) mit einem Ring (40) verbunden sind, der auf festen Gleitbahnen (41) mit Hilfe von Winden (42) bewegbar ist, die fest mit der festen Struktur (43) des Basismotors (2) verbunden sind, wobei der Ring (40) bei dem im Gegenstrom der Sekundärströmung (6) erfolgenden Ausfahren der Klappen (115) von der stromabwärtigen zur stromaufwärtigen Seite verschoben wird.

7. Schubumkehrvorrichtung für ein Turbofantriebwerk nach Anspruch 6, bei der stromaufwärts jeder Klappe (115) ein bewegliches Element in Form eines Schiebers (133) auf der äußeren Hülle (116) so angeordnet ist, daß ein Durchgang (46) für eine zusätzliche Strömung geöffnet wird, die zu dem stromaufwärts der Klappe (115) angeordneten Schacht (131) verläuft, um sich wieder mit der umgelenkten Hauptströmung (6a) zu vereinigen.

8. Schubumkehrvorrichtung für ein Turbofantriebwerk nach einem der Ansprüche 6 oder 7, bei der die Klappen (115) Hauptklappen (115a) umfassen, die allein mit dem Steuerungssystem gekuppelt und untereinander durch Sekundärklappen (115a) verbunden sind, die paarweise zwischen jeweils zwei Hauptklappen (115a) angeordnet und im Bereich eines Gelenks (44) mit der festen Struktur der Schubumkehrvorrichtung und im Bereich eines weiteren Gelenks (45) mit den Hauptklappen (115a) verbunden sind.

## Claims

1. Thrust reverser for turbofan with very high bypass ratio, including movable elements or flaps (15, 115) which can be retracted, in the direct thrust position, into the wall of the outer casing (16, 116) of the central basic engine (2) and, furthermore, be deployed, so as to constitute obstacles forming an annular deflection assembly for the secondary flow (6a), providing a thrust reversal, the said flaps (15, 115) being associated with a displacement control system housed inside the said casing (16, 116), characterized in that, in the deployed position, the said flaps (15, 115) have, in at least two parts of the annular assembly, a lower part (A) and an upper part (B) respectively, an angle of inclination a₁ corresponding to a larger displacement of the said flap (15, 115) with respect to its retracted position than in at least two other lateral parts (C, D) of the said annular assembly, so that the output cross-section of the thrust reverser is larger in the said lateral regions (C, D) than in the said lower (A) and upper (B) regions.

2. Turbofan thrust reverser according to Claim 1, in which the movable flaps (15) are articulated on pivot axles (21) integral with the casing (16) of the basic engine (2) and situated halfway along, so that, in the deployed position, an upper part (15c) of the said flap constitutes the deflecting obstacle for the secondary flow (6a) and a lower part (15d) opens an inner well (31) in the said casing (16) upstream of the flap (15), the said flaps (15) being deployed in the direction of the current of the secondary flow (6).

3. Turbofan thrust reverser according to either of Claims 1 or 2, in which a movable element of the valve type (33) is arranged on the outer casing (16) upstream of each flap (15) so as to open, in the thrust-reversal position, a complementary passage for the flow (36) through the opening (35) freed by the movement of the said valve (33) towards the said well (31) in order to rejoin the main reversed flow (6a).

4. Turbofan thrust reverser according to Claim 3, in which the movable elements are given a particular positional configuration such that the flaps (15) have a small inclination (a₃) with respect to their retracted position and the valves (33) have a limited degree of opening so as to allow passage of an additional flow (37) corresponding to an increase in the equivalent output cross-section of the secondary duct during certain defined flight phases, in particular take-off.

5. Turbofan thrust reverser according to any one of Claims 1 to 4, in which the said flaps (15) comprise main flaps (15a), which alone are connected to the control system and are linked together by pairs of secondary flaps (15b), the linkages being provided by axles (22) allowing the flaps to rotate between each other and all the flaps (15) being placed in the retracted position in a housing (18) made inside the said outer casing (16).

6. Turbofan thrust reverser according to Claim 1, in which the flaps (115) have their downstream end linked at an articulation (39) to a ring (40) which can be moved on fixed slideways (41) using jacks (42) integral with the fixed structure (43) of the basic engine (2), the said ring (40) being moved upstream during the deployment of the said flaps (115), which occurs against the secondary flow (6).

7. Turbofan thrust reverser according to Claim 6, in which a mobile element of the valve type (133) is arranged on the outer casing (116) upstream of each flap (115) so as to open a passage (46) for a complementary flow towards the well (131), made upstream of the flap (115) in order to rejoin the main reversed flow (6a).

8. Turbofan thrust reverser according to one of Claims 6 or 7, in which the said flaps (115) comprise main flaps (115a), which alone are connected to the control system and are linked together by secondary flaps (115b) arranged in pairs between two main flaps (115a), linked to the fixed structure of the reverser at an articulation (44) and to the main flaps (115a) at an articulation (45).
